# EUROPEAN PATENT APPLICATION

(11) **EP 3 937 272 A1**
(43) Date of publication of application: **12.01.2022**
(21) Application number: 20765850.1
(22) Date of filing: 28.02.2020
(51) Int. Cl.: H01M 2/10

(54) **ELECTROCHEMICAL CELL MODULE**

(30) Priority: 06.03.2019 JP 2019040487
(71) Applicant: Kyocera Corporation, Kyoto-shi, Kyoto 612-8501 (JP)
(72) Inventor: OOSHIMA, Katsufumi, Kyoto-shi, Kyoto 612-8501 (JP); IWAMOTO, Shohei, Kyoto-shi, Kyoto 612-8501 (JP)
(74) Representative: TBK
(86) International application number: PCT/JP2020/008397
(87) International publication number: WO 2020/179690

(57) **Abstract**

An electrochemical cell module includes a housing including a main surface plate having a first surface with a first recess and a side plate in contact with the main surface plate, an electrochemical cell located in the housing, being plate-like, and having a main surface, a pressure plate located in the housing, facing the first surface, and being in contact with the main surface, and a spring received in the first recess to urge the pressure plate and the main surface plate.

## Description

### FIELD

The present disclosure relates to an electrochemical cell module.

### BACKGROUND

A known electrochemical cell module is described in, for example, Patent Literature 1. The electrochemical cell module described in Patent literature 1 includes a stack of multiple rectangular cells. Each rectangular cell is a flat, rectangular prism. The electrochemical cell module described in Patent Literature 1 also includes a pair of pressure plates and springs. The pair of pressure plates press the rectangular cells with the springs.

### CITATION LIST

### PATENT LITERATURE

Patent Literature 1: Japanese Unexamined Patent Application Publication No. 2003-036830

### BRIEF SUMMARY

An electrochemical cell module according to one or more aspects of the present disclosure includes a housing, an electrochemical cell, a pressure plate, and a spring. The housing includes a main surface plate and a side plate in contact with the main surface plate. The main surface plate has a first surface with a first recess. The electrochemical cell is located in the housing, is plate-like, and has a main surface. The pressure plate is located in the housing, faces the first surface, and is in contact with the main surface. The spring is received in the first recess to urge the pressure plate and the main surface plate.

### BRIEF DESCRIPTION OF DRAWINGS

The objects, features, and advantages of the present disclosure will become more apparent from the following detailed description and the drawings.
FIG. 1 is a perspective view of an electrochemical cell module X1.
FIG. 2 is a cross-sectional view of the electrochemical cell module X1 in FIG. 1 taken along line II-II.
FIG. 3 is an external view of an electrochemical cell.
FIG. 4 is a cross-sectional view of the electrochemical cell in FIG. 3 taken along line IV-IV.
FIG. 5 is an enlarged view of area V in FIG. 2.
FIG. 6 is a plan view of a main surface plate removed from an electrochemical cell module as viewed in the direction perpendicular to a first surface.
FIG. 7 is a cross-sectional view of an electrochemical cell module X2, corresponding to FIG. 2.
FIG. 8 is an enlarged view of area VIII in FIG. 7.
FIG. 9 is a plan view of a pressure plate removed from an electrochemical cell module as viewed in the direction perpendicular to a third surface.
FIG. 10 is a perspective view of an electrochemical cell module X3.
FIG. 11 is a cross-sectional view of the electrochemical cell module X3 in FIG. 10 taken along line XI-XI.
FIG. 12 is a cross-sectional view of an electrochemical cell module X4, corresponding to FIG. 7.

### DETAILED DESCRIPTION

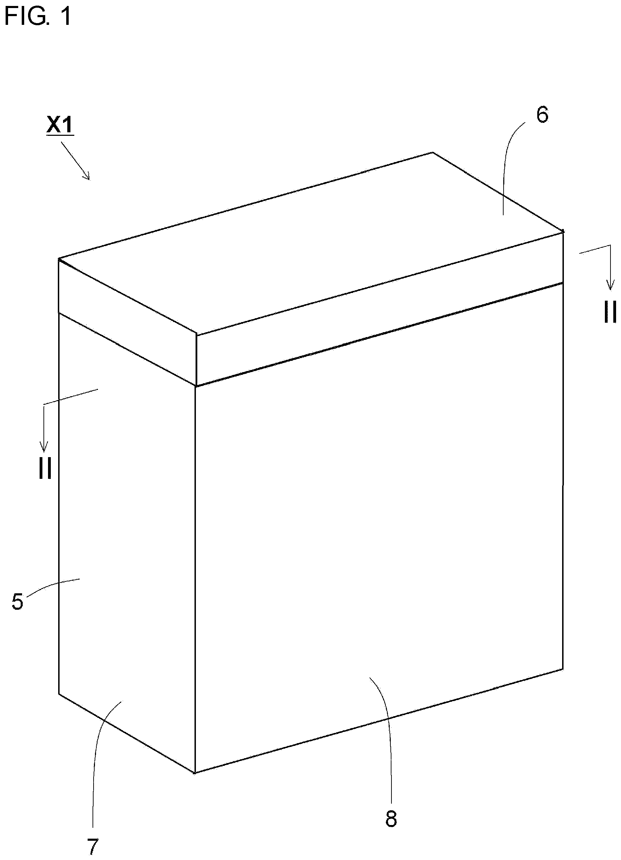

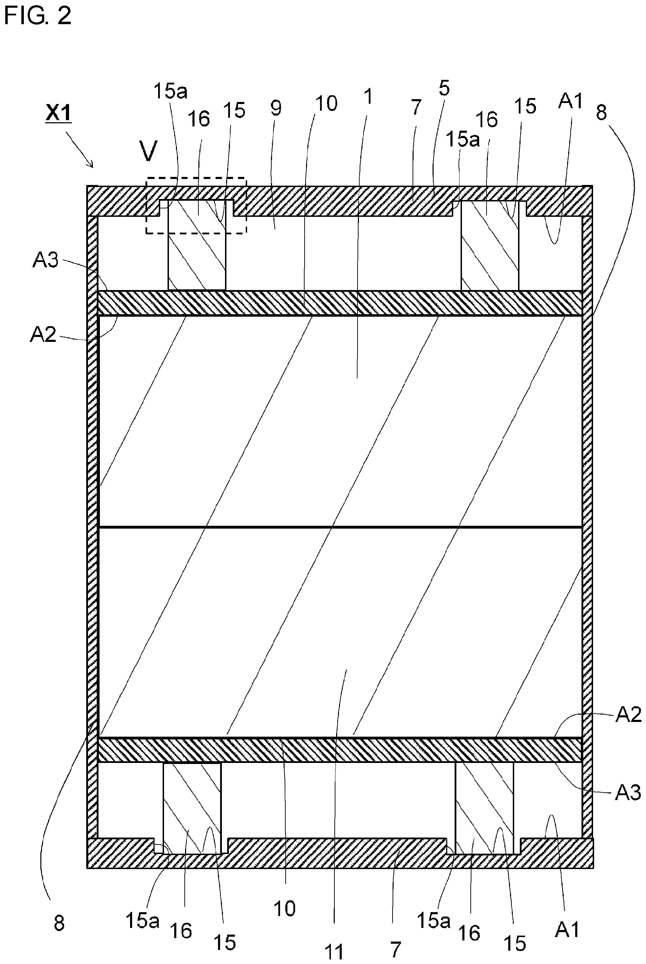

An electrochemical cell module X1 will be described in detail with reference to FIGs. 1 and 2. As shown in FIGs. 1 and 2, the electrochemical cell module includes a housing 5 having main surface plates 7 and side plates 8, a first electrochemical cell 1, a second electrochemical cell 11, pressure plates 10 in contact with the first electrochemical cell 1 or the second electrochemical cell 11 and facing the main surface plates 7, and springs 16 that urge the pressure plates 10 and the main surface plates 7.

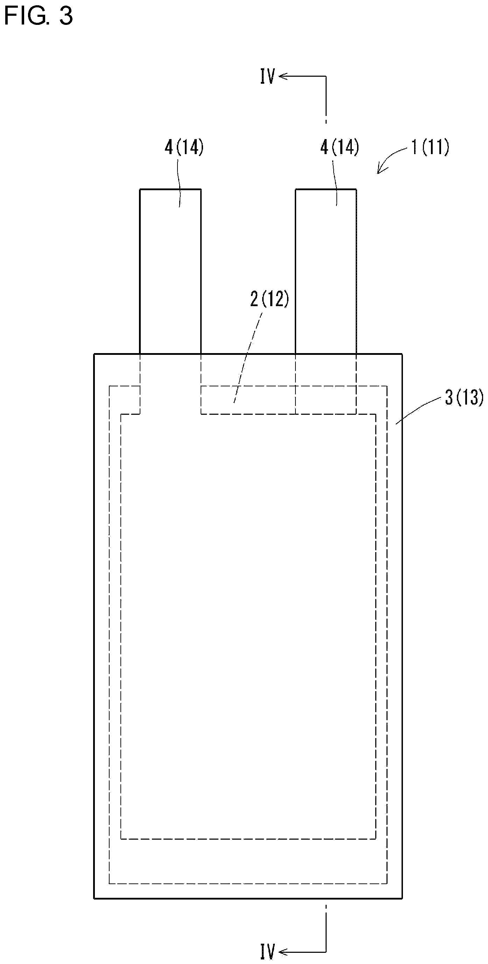

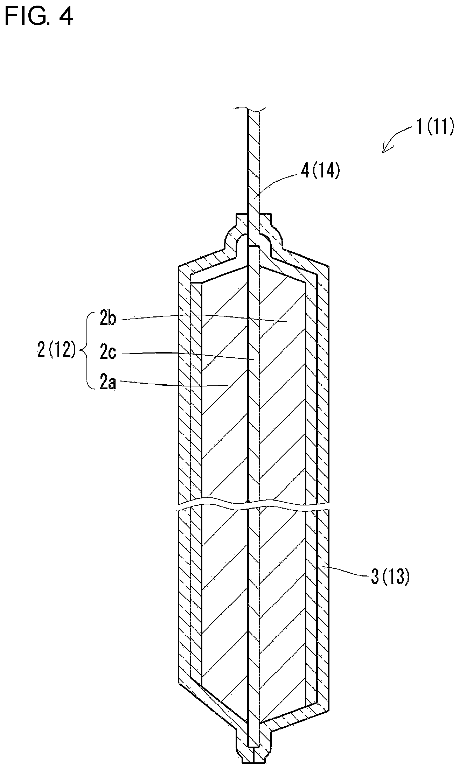

As shown in FIGs. 3 and 4, the first electrochemical cell 1 functions as a battery in the electrochemical cell module. The first electrochemical cell 1 is, for example, a lithium-ion battery. The first electrochemical cell 1 includes a first electricity generator 2, a first casing 3, and first terminals 4. The first electrochemical cell 1 is, for example, plate-like. The first electrochemical cell 1 electrically connected to an external device can supply electricity to the external device.

The first electricity generator 2 charges and discharges through an electrochemical reaction. The first electricity generator 2 includes, for example, a positive electrode 2a, a negative electrode 2b, and a separator 2c between the positive electrode 2a and the negative electrode 2b. The first electricity generator 2 can exchange cations and anions between the positive electrode 2a and the negative electrode 2b through the separator 2c. The first electricity generator 2 with the positive electrode 2a and the negative electrode 2b electrically connected to an external device can supply electricity to the external device.

The first electricity generator 2 is, for example, a stack of the positive electrode 2a, the separator 2c, and the negative electrode 2b. The first electricity generator 2 is, for example, plate-like. The first electricity generator 2 includes, for example, the positive electrode 2a, the separator 2c, and the negative electrode 2b stacked in the thickness direction of the plate.

The positive electrode 2a and the negative electrode 2b are, for example, electrochemically active. The positive electrode 2a and the negative electrode 2b may include, for example, an active material and an electrolyte. The electrolyte may be, for example, a solvent containing salt or a solvent mixture containing salt.

More specifically, the positive electrode 2a and the negative electrode 2b may include, for example, the active material and the electrolyte described in U.S. Provisional Patent Application No. 61/787,382 entitled Semi-Solid Electrodes Having High Rate Capability and U.S. Provisional Patent Application No. 61/787,372 entitled Asymmetric Battery Having a Semi-Solid Cathode and High Energy Density Anode. The positive electrode 2a and the negative electrode 2b may include, for example, an additive.

The separator 2c allows exchange of cations and anions between the positive electrode 2a and the negative electrode 2b. For example, the separator 2c may have pores for passage of cations and anions. The separator 2c may be formed from, for example, a porous insulating material. More specifically, the separator 2c may be formed from, for example, a polyolefin or polyvinyl chloride. The first electricity generator 2 can electrically insulate the positive electrode 2a and the negative electrode 2b from each other with the separator 2c.

The plate-like first electricity generator 2 may have, for example, a length of 50 to 500 mm, a width of 50 to 300 mm, and a thickness of 0.1 to 2.0 mm.

The first casing 3 has a space for enclosing the first electricity generator 2. The first casing 3 protects the first electricity generator 2 from the external environment. More specifically, the first casing 3 electrically insulates the first electricity generator 2 from the external environment. The first casing 3 entirely covers the first electricity generator 2.

The first casing 3 is, for example, a flat bag. The first casing 3 is formed from, for example, a laminated film shaped into a flat bag. The first casing 3 may be formed by, for example, welding two laminated films together. The first casing 3 may be, for example, rectangular as viewed in the stacking direction of the positive electrode 2a, the separator 2c, and the negative electrode 2b.

The first casing 3 includes, for example, an insulating material. The first casing 3 thus prevents a short-circuit between the external environment and the first electricity generator 2 and protects the first electricity generator 2 from the external environment. The first casing 3 includes, for example, a resin material. More specifically, the resin material may be, for example, polyethylene terephthalate or polyethylene.

The first casing 3 may be, for example, multilayered. More specifically, the first casing 3 includes, for example, a thermally adhesive resin material and a heat-resistant resin material. More specifically, the thermally adhesive resin material melts at temperatures lower than 150 °C, and the heat-resistant resin material melts at 150 to 300 °C. The heat-resistant resin material may include, for example, polyethylene terephthalate or polyethylene naphthalate. The thermally adhesive resin material may be, for example, polyethylene or polypropylene.

The first terminals 4 electrically connect the first electricity generator 2 to an external device. The first terminals 4 are, for example, plate-like. More specifically, the first terminals 4 are, for example, quadrangular as viewed in the stacking direction of the first electrochemical cell 1 and the second electrochemical cell 11. The first terminals 4 may be, for example, rectangular. The rectangular first terminals 4 may include, for example, long sides and short sides.

The first terminals 4 are in contact with the first electricity generator 2 as viewed in the stacking direction of the first electrochemical cell 1 and the second electrochemical cell 11. The first terminals 4 are on one peripheral side of the first electricity generator 2 as viewed in the stacking direction of the first electrochemical cell 1 and the second electrochemical cell 11. The first terminals 4 protrude outward from the first electrochemical cell 1 for electrical connection to an external device. The first terminals 4 electrically connect to external connection terminals outside the first electrochemical cell 1.

The first terminals 4 are, for example, electrically conductive. The first terminals 4 may include, for example, a metal material. More specifically, the metal material may be, for example, aluminum or copper. The plate-like first terminals 4 may have, for example, a length of 30 to 100 mm, a width of 10 to 100 mm, and a thickness of 0.1 to 0.5 mm.

The second electrochemical cell 11 supplies electricity to an external device, similarly to the first electrochemical cell 1. In the electrochemical cell module, the first electrochemical cell 1 and the second electrochemical cell 11 are connected to each other in parallel. This may increase the capacity of the electrochemical cell module. The first electrochemical cell 1 and the second electrochemical cell 11 may also be connected to each other in series. This may increase the voltage across the electrochemical cell module.

The second electrochemical cell 11 and the first electrochemical cell 1 are, for example, stacked on each other in the housing 5. The second electrochemical cell 11 includes a second electricity generator 12, a second casing 13, and second terminals 14. The second electrochemical cell 11 has the same shape as the first electrochemical cell 1 in the electrochemical cell module. The second electrochemical cell 11 may be shaped, for example, differently from the first electrochemical cell 1. The second electrochemical cell 11 is stacked on the first electrochemical cell 1 with their outer peripheries aligned with each other in the electrochemical cell module. The second electrochemical cell 11 may also be stacked on the first electrochemical cell 1 without their outer peripheries being aligned with each other.

The first electricity generator 2 and the second electricity generator 12 are stacked on each other with their long sides aligned and their short sides aligned as viewed in the stacking direction of the first electrochemical cell 1 and the second electrochemical cell 11. The first casing 3 and the second casing 13 are stacked on each other with their long sides aligned and their short sides aligned as viewed in the stacking direction of the first electrochemical cell 1 and the second electrochemical cell 11.

The second electricity generator 12 may be formed from, for example, the material included in the first electricity generator 2. More specifically, the second electricity generator 12 may be formed from the same material as for the first electricity generator 2. The second electricity generator 12 may also be formed from, for example, a material different from the material for the first electricity generator 2.

The second casing 13 has the same shape as the first casing 3. The second casing 13 may be shaped, for example, differently from the first casing 3. The second casing 13 may be formed from, for example, the material included in the first casing 3. More specifically, the second casing 13 may be formed from the same material as for the first casing 3. The second casing 13 may also be formed from, for example, a material different from the material for the first casing 3.

The second terminals 14 have the same shape as the first terminals 4. The second terminals 14 may be shaped, for example, differently from the first terminals 4. The second terminals 14 may be formed from, for example, the material included in the first terminals 4. More specifically, the second terminals 14 may be formed from the same material as for the first terminals 4. The second terminals 14 may also be formed from, for example, a material different from the material for the first terminals 4.

The second electrochemical cell 11 may have, for example, the same dimensions as the first electrochemical cell 1. The second electrochemical cell 11 may also have, for example, dimensions different from the dimensions of the first electrochemical cell 1.

The housing 5 has a space for accommodating the first electrochemical cell 1 and the second electrochemical cell 11. The housing 5 protects the first electrochemical cell 1 and the second electrochemical cell 11 from the external environment. More specifically, the housing 5 protects the first electrochemical cell 1 and the second electrochemical cell 11 against an external force received from the external environment. The housing 5 is, for example, a box. The housing 5 may be formed by, for example, shaping a single member into a rectangular prism. The housing 5 may also include, for example, two or more members combined together.

The housing 5 includes, for example, a metal material. Such a housing 5 has higher rigidity and reduces transmission of any external force from the external environment to the first electrochemical cell 1 and the second electrochemical cell 11. The housing 5 thus protects the first electrochemical cell 1 and the second electrochemical cell 11 from the external environment. The metal material may be, for example, aluminum or stainless steel. The housing 5 thus easily transfers heat generated in the electrochemical cells, thus improving heat dissipation and reducing the likelihood of battery performance deteriorating.

The housing 5 may include, for example, multiple parts. The housing 5 may include, for example, two main surface plates 7, two side plates 8, a bottom plate 9, and a terminal cover 6. More specifically, the housing 5 may be formed from a metal material and a resin material in combination.

The terminal cover 6 protects the terminals of the stacked first electrochemical cell 1 and second electrochemical cell 11. The terminal cover 6 thus faces the terminals of the stacked first electrochemical cell 1 and second electrochemical cell 11. The terminal cover 6 may be, for example, rectangular as viewed from the terminals of the first electrochemical cell 1 and the second electrochemical cell 11. The terminal cover 6 may be formed from, for example, a resin material. More specifically, the resin material may be polyethylene terephthalate or polyethylene naphthalate. The rectangular terminal cover 6 may have, for example, a length of 200 to 600 mm, a width of 50 to 300 mm, and a thickness of 0.1 to 5 mm.

The main surface plates 7 protect the main surfaces of the first electrochemical cell 1 and the second electrochemical cell 11. The main surface plates 7 thus each face the main surface of the first electrochemical cell 1 or the second electrochemical cell 11. The main surface plates 7 may be rectangular as viewed in the stacking direction of the first electrochemical cell 1 and the second electrochemical cell 11. The main surface plates 7 may be formed from, for example, a metal material. More specifically, the metal material may be, for example, aluminum or stainless steel. Such main surface plates 7 easily transfer heat generated in the first electrochemical cell 1 and the second electrochemical cell 11 to the outside, thus reducing the likelihood of battery performance deteriorating.

The main surface plates 7 may be formed from, for example, a resin material. The resin material may be, for example, a heat-resistant resin material with a high melting point. The heat-resistant resin material may be, for example, polyethylene terephthalate (PET). Such main surface plates 7 electrically insulate the first electrochemical cell 1 and the second electrochemical cell 11 from the external environment, thus reducing the likelihood of a short-circuit forming between the first electrochemical cell 1 or the second electrochemical cell 11 and the external environment. The rectangular main surface plates 7 may have, for example, a length of 200 to 600 mm, a width of 50 to 300 mm, and a thickness of 0.5 to 5 mm.

The main surface plates 7 each have a first surface A1. The first surface A1 faces the internal space of the housing 5. The first surface A1 may, for example, face the first electrochemical cell 1 or the second electrochemical cell 11. Each main surface plate 7 has a first recess 15 on the first surface A1. The first recess 15 receives a spring 16 in position. As viewed in the direction perpendicular to the first surface A1, the first recess 15 may be, for example, circular. The circular first recess 15 as viewed in the direction perpendicular to the first surface A1 may have, for example, a diameter of 5 to 40 mm and a depth of 1 to 30 mm. The first recess 15 may be formed by, for example, stamping the main surface plate 7. The function and the shape of the first recess 15 will be described in detail later.

The side plates 8 protect the side surfaces of the first electrochemical cell 1 and the second electrochemical cell 11. The side plates 8 thus face the side surfaces of the first electrochemical cell 1 and the second electrochemical cell 11. The side plates 8 may also be, for example, in contact with the first electrochemical cell 1 and the second electrochemical cell 11. The side plates 8 may be, for example, rectangular as viewed in the direction perpendicular to the side surfaces of the first electrochemical cell 1 and the second electrochemical cell 11. The side plates 8 may be formed from, for example, a metal material. More specifically, the side plates 8 may be formed from, for example, aluminum or stainless steel. Such side plates 8 easily transfer heat generated in the first electrochemical cell 1 and the second electrochemical cell 11 to the outside. This reduces the likelihood of battery performance deteriorating.

The side plates 8 may also be formed from, for example, a resin material. The resin may be, for example, a heat-resistant resin material. The heat-resistant resin material may be, for example, PET. Such side plates 8 can electrically insulate the first electrochemical cell 1 and the second electrochemical cell 11 from the external environment, thus reducing the likelihood of a short-circuit forming between the first electrochemical cell 1 or the second electrochemical cell 11 and the external environment. The rectangular side plates 8 as viewed in the direction perpendicular to the side surfaces of the first electrochemical cell 1 and the second electrochemical cell 11 may have, for example, a length of 200 to 600 mm, a width of 50 to 300 mm, and a thickness of 0.5 to 5 mm.

The bottom plate 9 protects the surfaces of the first electrochemical cell 1 and the second electrochemical cell 11 opposite to the surfaces from which their terminals protrude. The bottom plate 9 may thus be in contact with the surfaces of the first electrochemical cell 1 and the second electrochemical cell 11 opposite to the surfaces from which their terminals protrude. The bottom plate 9 may be rectangular as viewed in the direction perpendicular to the surfaces of the first electrochemical cell 1 and the second electrochemical cell 11 opposite to the surfaces from which their terminals protrude. The bottom plate 9 may be formed from, for example, a metal material. The metal material may be, for example, aluminum or stainless steel. Such a bottom plate 9 easily transfers heat generated in the first electrochemical cell 1 and the second electrochemical cell 11 to the outside, reducing the likelihood of battery performance deteriorating.

The bottom plate 9 may also be formed from, for example, a resin material. The resin material may be, for example, a heat-resistant resin material. The heat-resistant resin material may be, for example, PET. Such a bottom plate 9 can electrically insulate the first electrochemical cell 1 and the second electrochemical cell 11 from the external environment, thus reducing the likelihood of a short-circuit forming between the first electrochemical cell 1 or the second electrochemical cell 11 and the external environment. The bottom plate 9 may also be formed by, for example, bending part of a side plate 8 or a main surface plate 7. The rectangular bottom plate 9 as viewed in the direction perpendicular to the surfaces of the first electrochemical cell 1 and the second electrochemical cell 11 opposite to the surfaces from which their terminals protrude may have, for example, a length of 200 to 600 mm, a width of 50 to 300 mm, and a thickness of 0.5 to 5 mm.

The pressure plates 10 apply pressure to the first electrochemical cell 1 and the second electrochemical cell 11. The pressure plates 10 each are located in the housing 5 between one main surface plate 7 and the first electrochemical cell 1 or between the other main surface plate 7 and the second electrochemical cell 11. The pressure plates 10 may be, for example, in contact with the first electrochemical cell 1 or the second electrochemical cell 11. The pressure plates 10 may be, for example, rectangular as viewed in the stacking direction of the first electrochemical cell 1 and the second electrochemical cell 11.

The pressure plates 10 may be formed from, for example, a metal material. The metal material may be, for example, aluminum or stainless steel. Such pressure plates 10 easily transfer heat generated in the first electrochemical cell 1 and the second electrochemical cell 11 to the outside. This reduces the likelihood of battery performance deteriorating.

The pressure plates 10 may also be formed from, for example, a resin material. The resin material may be, for example, a thermosetting resin. The thermosetting resin may be, for example, PET. Such pressure plates 10 can electrically insulate the first electrochemical cell 1 and the second electrochemical cell 11 from the external environment, thus reducing the likelihood of a short-circuit forming between the first electrochemical cell 1 or the second electrochemical cell 11 and the external environment.

The pressure plates 10 each have a second surface A2 in contact with the corresponding electrochemical cell and a third surface A3 opposite to the second surface A2. The third surface A3 of each pressure plate 10 faces the first surface A1 of the corresponding main surface plate. The pressure plates 10 are movable in the stacking direction of the first electrochemical cell 1 and the second electrochemical cell 11. Each pressure plate 10 may have, for example, a second recess 17 on the third surface A3. The second recess 17 is circular as viewed in the direction perpendicular to the third surface A3. The second recess 17 may be, for example, quadrangular as viewed in the direction perpendicular to the third surface A3. The circular second recess 17 as viewed in the direction perpendicular to the third surface A3 may have, for example, a diameter of 5 to 40 mm and a depth of 1 to 50 mm. The second recess 17 may be formed by, for example, stamping the pressure plate 10. The function and the shape of the second recess 17 will be described in detail later.

The springs 16 urge the main surface plates 7 and the pressure plates 10. Each spring 16 is thus located between a main surface plate 7 and a pressure plate 10. The springs 16 may be, for example, elastic members. More specifically, the springs 16 may be helical coil springs. The springs 16 may be, for example, leaf springs of bent plates. The springs 16 may be formed from, for example, a metal material. The metal material may be, for example, steel or stainless steel. The helical springs 16 may have, for example, a diameter of 5 to 40 mm, a length of 1 to 50 mm, and a pitch of 0.5 to 5 mm.

Each spring 16 has a first end and a second end. The first end of the spring 16 is in contact with the main surface plate 7. The second end of the spring 16 is in contact with the pressure plate 10.

The first end of the spring 16 is received in the first recess 15 on the first surface A1 of the main surface plate 7. The first recess 15 reduces misalignment of the first end of the spring 16 with its side surfaces 15a. The spring 16 is thus less likely to be misaligned between the main surface plate 7 and the pressure plate 10. The spring 16 thus applies an appropriate pressure to the pressure plate 10 and to the first electrochemical cell 1 or the second electrochemical cell 11. This reduces the likelihood of shortening the service life of the first electrochemical cell 1 and the second electrochemical cell 11.

As shown in FIG. 2, the first recess 15 may have, for example, a rectangular cross section taken perpendicularly to the first surface A1. The first recess 15 having, for example, a rectangular cross section may have the long sides extending in the depth direction. The first recess 15 can thus reduce, while retaining one end of the spring 16 in position, misalignment of the other portions of the spring 16 with its side surfaces 15a. The spring 16 can thus apply an appropriate pressure to the pressure plate 10, thus reducing the likelihood of shortening the service life of the first electrochemical cell 1 and the second electrochemical cell 11.

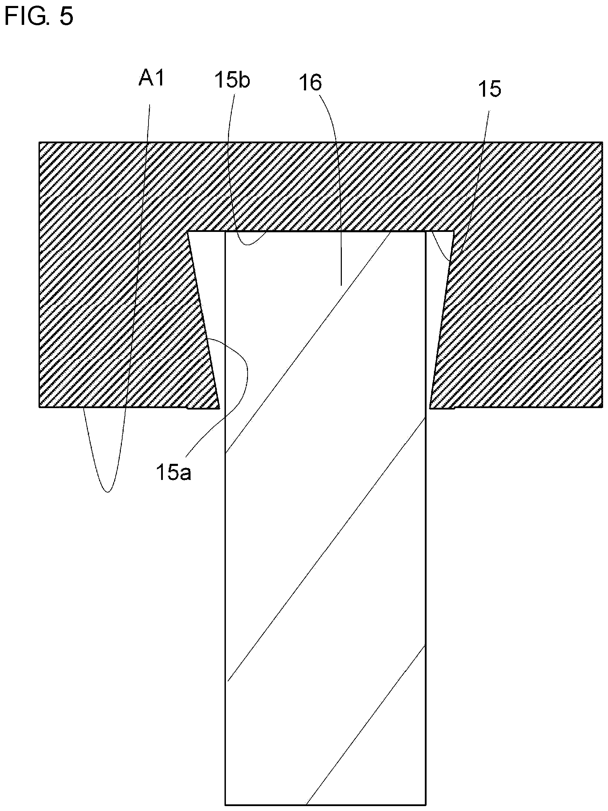

As shown in FIG. 5, the first recess 15 may have the side surfaces 15a inclined with respect to its bottom surface 15b at an angle greater or less than 90°. The angle between each side surface 15a and the bottom surface 15b of the first recess 15 may be, for example, 90° or less. In this case, the spring 16 may have a larger diameter in a portion in contact with the bottom surface 15b than in portion near the opening of the first recess 15. This allows the end of the spring 16 in contact with the bottom surface 15b of the first recess 15 to be caught onto the side surfaces 15a of the first recess 15, thus reducing misalignment of the spring 16. The spring 16 can thus apply an appropriate pressure to the pressure plate 10, thus reducing the likelihood of shortening the service life of the first electrochemical cell 1 and the second electrochemical cell 11.

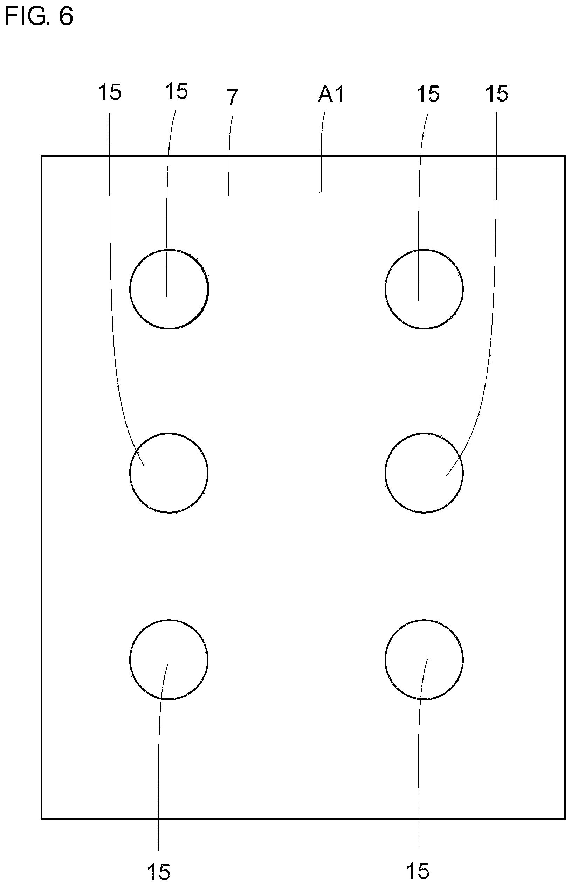

Each main surface plate 7 may have, for example, multiple first recesses 15 on the first surface A1. As shown in FIG. 6, the multiple first recesses 15 may be arranged along the long sides of the main surface plate 7. As shown in FIG. 6, the multiple first recesses 15 may be on the first surface A1 at, for example, equal intervals along the long sides and the short sides. This allows the springs 16 to apply pressure uniformly across the first electrochemical cell 1 or the second electrochemical cell 11. This reduces the likelihood of shortening the service life of the first electrochemical cell 1 and the second electrochemical cell 11.

The second end of each spring 16 may be received in, for example, the second recess 17 on the third surface A3 of the pressure plate 10. The spring 16 is thus less likely to be misaligned between the main surface plate 7 and the pressure plate 10. The spring 16 can thus apply pressure uniformly across the pressure plate 10, thus reducing the likelihood of shortening the service life of the first electrochemical cell 1 and the second electrochemical cell 11.

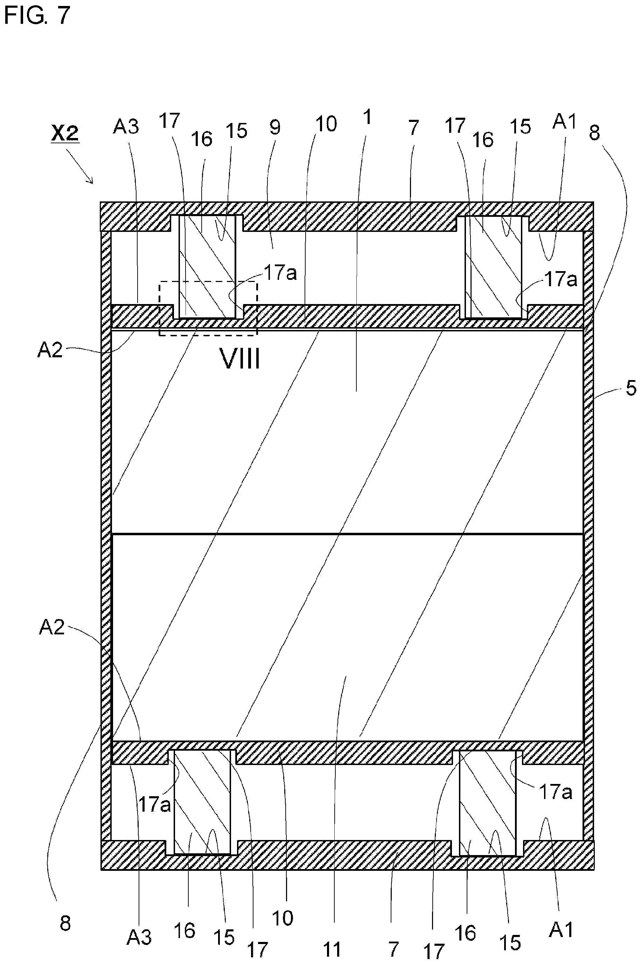

As shown in FIG. 7, the second recess 17 may have, for example, a rectangular cross section taken perpendicularly to the third surface A3. The second recess 17 having, for example, a rectangular cross section may have its long sides extending in the depth direction. The second recess 17 can thus reduce, while retaining one end of the spring 16 in position, misalignment of the other portions of the spring 16 with its side surfaces 17a. The spring 16 can thus apply an appropriate pressure to the pressure plate 10, thus reducing the likelihood of shortening the service life of the first electrochemical cell 1 and the second electrochemical cell 11.

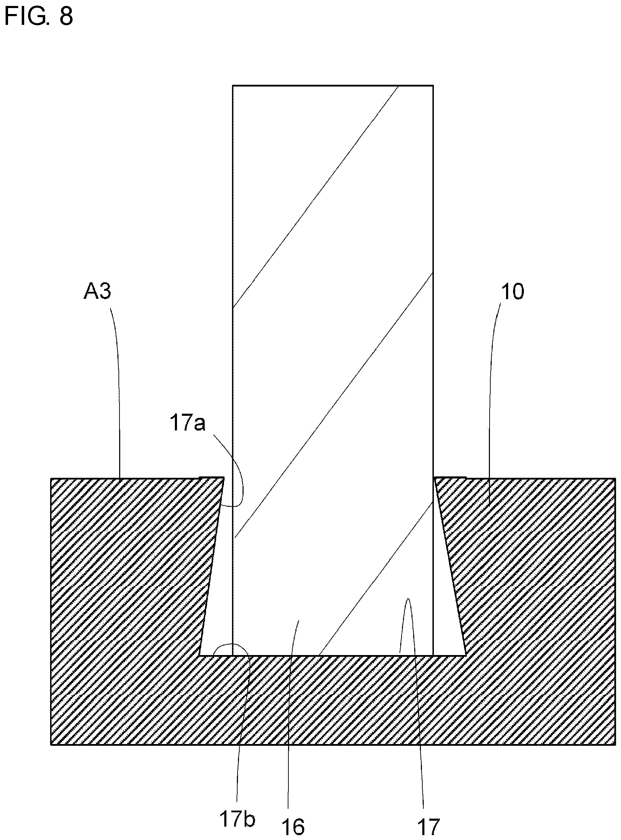

As shown in FIG. 8, the second recess 17 may have the side surfaces 17a inclined with respect to its bottom surface 17b. The angle between each side surface 17a and the bottom surface 17b of the second recess 17 may be, for example, 90° or less. The side surfaces 17a of the second recess 17 thus more reliably reduce misalignment of the spring 16. The spring 16 can thus apply an appropriate pressure to the pressure plate 10, thus reducing the likelihood of shortening the service life of the first electrochemical cell 1 and the second electrochemical cell 11.

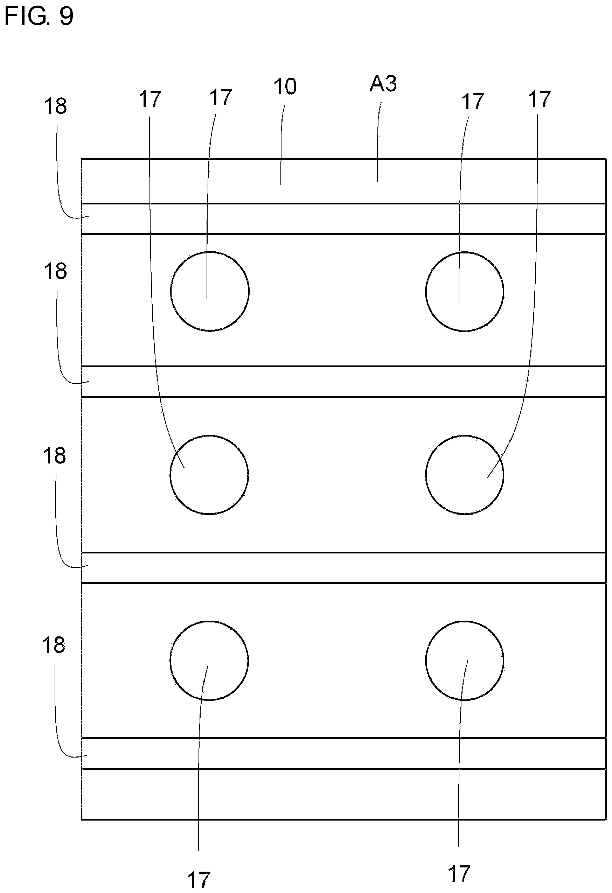

Each pressure plate 10 may have, for example, multiple second recesses 17 on the third surface A3. As shown in FIG. 9, the multiple second recesses 17 may be arranged along the long sides of the pressure plate 10. As shown in FIG. 9, the multiple second recesses 17 may be on the third surface A3 at, for example, equal intervals along the long sides and the short sides. This allows the springs 16 to apply pressure uniformly across the first electrochemical cell 1 or the second electrochemical cell 11. This reduces the likelihood of shortening the service life of the first electrochemical cell 1 and the second electrochemical cell 11.

Each pressure plate 10 may have, for example, a first protrusion 18 on the third surface A3. The first protrusion 18 may extend, for example, in one direction on the third surface A3. This reduces the likelihood of the pressure plate 10 breaking in a direction intersecting the first protrusion 18 under external stress applied to the pressure plate 10. As viewed in the direction perpendicular to the third surface A3, the first protrusion 18 may be, for example, strip-like.

The first protrusion 18 may extend, for example, in a direction intersecting the long sides of the pressure plate 10. This reduces the likelihood of the pressure plate 10 breaking in a direction intersecting the short sides of the pressure plate 10. The pressure plate 10 may have, for example, multiple first protrusions 18. As shown in FIG. 9, the multiple first protrusions 18 may be arranged at, for example, equal intervals on the third surface A3.

The first protrusion 18 may be formed from, for example, a metal material. The metal material may be, for example, aluminum or stainless steel. The first protrusion 18 may be formed from, for example, the same material as the pressure plate 10. The first protrusion 18 may be formed by, for example, bending the pressure plate 10 of one sheet. As viewed in the direction perpendicular to the third surface, the first protrusion 18 may have, for example, a length of 1 to 50 mm, a width of 1 to 50 mm, and a height of 1 to 50 mm.

Each main surface plate 7 may have, for example, a second protrusion 19. The second protrusion 19 may be, for example, on the first surface A1. The main surface plate 7 may have a fourth surface A4 opposite to the first surface A1. The second protrusion 19 may be, for example, on the fourth surface A4. Such a main surface plate 7 can disperse external stress applied to the second protrusion 19, and is thus less breakable. As viewed in the direction perpendicular to the first surface A1, the second protrusion 19 may be, for example, strip-like. The second protrusion 19 may be formed from, for example, a metal material. The metal material may be aluminum or stainless steel. The second protrusion 19 may be formed from, for example, the same material as the main surface plate 7. The second protrusion 19 may be formed by, for example, bending the main surface plate 7 of one sheet.

For the rectangular main surface plate 7, the second protrusion 19 may extend in a direction intersecting the long sides of the main surface plate 7. The main surface plate 7 is thus less likely to bend in the direction intersecting the long sides when joined to the side plates 8 at the long sides. This reduces the likelihood of breakage of the housing 5. The second protrusion 19 may have, for example, a length of 1 to 50 mm, a width of 1 to 50 mm, and a height of 1 to 50 mm.

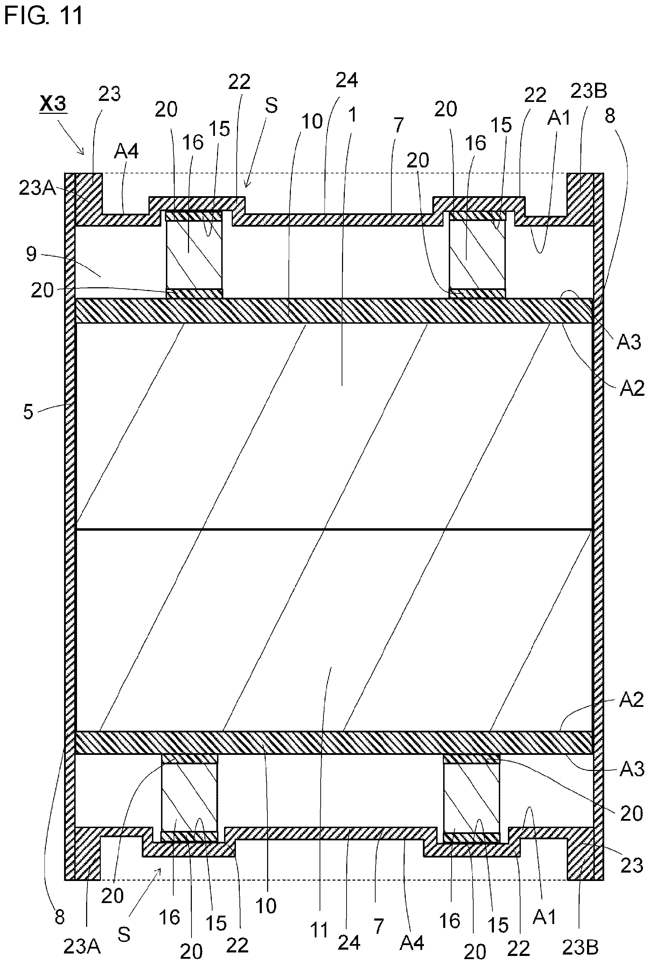

Each main surface plate 7 has the fourth surface A4 opposite to the first surface A1. In other words, the fourth surface A4 faces outward from the housing 5. The main surface plate 7 has, on the fourth surface A4, a first area 22 located opposite to the bottom surface 15b of the first recess 15. The main surface plate 7 also has, on the fourth surface A4, a second area 23 in contact with each side plate 8. As shown in FIG. 11, the fourth surface A4 has a second area 23A and a second area 23B. The fourth surface A4 also has a third area 24 other than the first area 22 and the second area 23. Each side plate 8 may have a side that is bent adjacent to the main surface plate 7 and joined to the main surface plate 7 on the fourth surface A4.

As shown in FIG. 11, the first area 22 is included in a region S. The region S is defined by the third area 24 and the line segment connecting the second area 23A and the second area 23B when the housing 5 is viewed in a cross section taken along a plane parallel to the bottom plate 9. In other words, the first area 22 is located inward from the second area 23 within the housing 5. Thus, any deformation of the first area 22 outward from the housing 5 under stress from the spring 16 is less likely to cause protrusion of the first area 22 outside the region S in FIG. 11. The first area 22 is thus less likely to be exposed to the external environment, reducing the likelihood of breakage of the housing 5.

The side plates 8 may be joined to the main surface plates 7 with screws tightened on the fourth surface A4. The main surface plates 7 and the side plates 8 may be joined with, for example, a bond. The bond may be, for example, a resin material. The resin material may be, for example, a vinyl acetate resin or an acrylic resin. The bond may be, for example, a single resin material or a mixture of resin materials.

Each spring 16 may be in contact with the pressure plate 10 with, for example, a bond 20 in between. The bond 20 more reliably fixes the spring 16 to the pressure plate 10. The spring 16 is thus less likely to be misaligned between the main surface plate 7 and the pressure plate 10. This reduces the likelihood of the first electrochemical cell 1 and the second electrochemical cell 11 having deteriorating performance. The spring 16 has its second end alone fixed with the bond 20. The spring 16 with its second end fixed to the pressure plate 10 is extendable in portions other than the second end. This allows the spring 16 fixed to the pressure plate 10 to apply pressure to the first electrochemical cell 1 and the second electrochemical cell 11.

The spring 16 may be, for example, in contact with the main surface plate 7 with the bond 20 in between. The bond 20 more reliably fixes the spring 16 to the main surface plate 7. The spring 16 is thus less likely to be misaligned between the main surface plate 7 and the pressure plate 10. This reduces the likelihood of the first electrochemical cell 1 and the second electrochemical cell 11 having deteriorating performance. The spring 16 has its first end alone fixed with the bond 20. The spring 16 with its first end fixed to the main surface plate 7 is extendable in portions other than the first end. This allows the spring 16 fixed to the main surface plate 7 to apply pressure to the first electrochemical cell 1 and the second electrochemical cell 11.

The bond 20 bonds the spring 16 to the pressure plate 10 or to the main surface plate 7. The bond 20 may be a resin material. Such a bond 20 can electrically insulate the spring 16 from the pressure plate 10 or the main surface plate 7, thus reducing the likelihood of a short-circuit forming between the first electrochemical cell 1 or the second electrochemical cell 11 and the external environment. The resin material may include, for example, a single resin material or a mixture of two resin materials. The resin material may be, for example, an acrylic resin, a silicone resin, or a vinyl acetate resin. The bond 20 may be, for example, a single resin material or a mixture of resin materials.

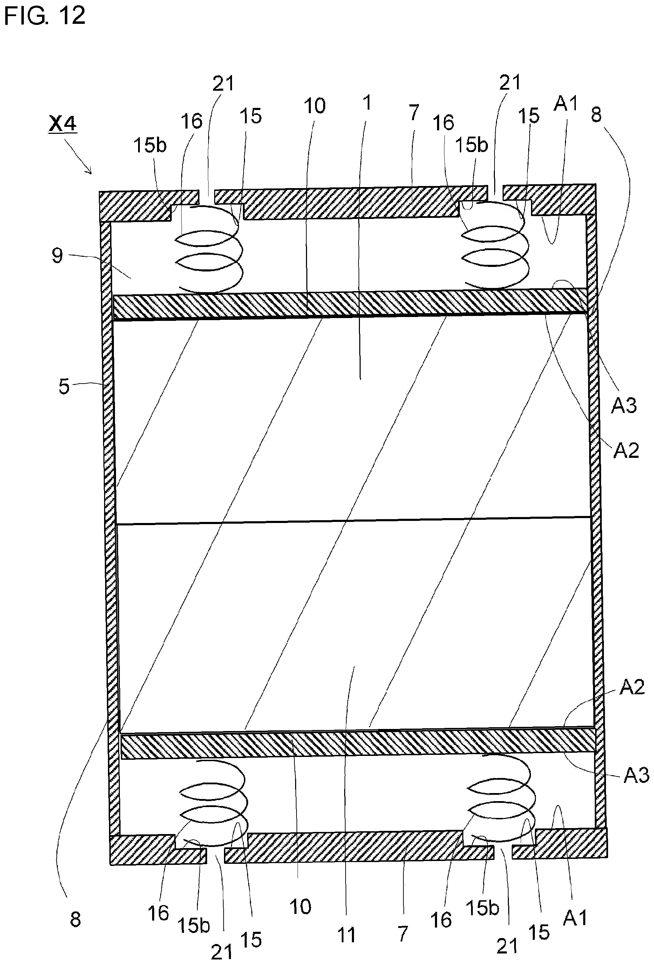

As shown in FIG. 12, the first recess 15 may have a through-hole 21 in the bottom surface 15b. The length of the spring 16 can be measured through the through-hole 21. This allows calculation of the pressure applied to the electrochemical cells located in the housing 5.

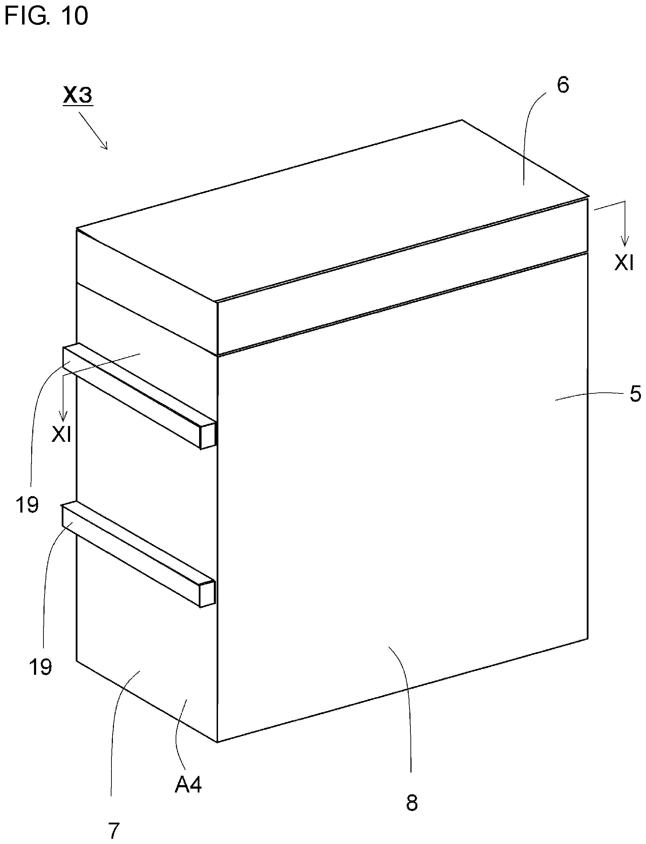

For ease of explanation, FIGs. 1 to 12 show the electrochemical cells, the electricity generators, the casings, or the terminals in the same shape having their outer peripheries aligned with each other. However, the shapes may be slightly different, with the outer peripheries slightly misaligned from each other. For example, the outer peripheries may be misaligned within the range of manufacturing errors. The housing 5 may accommodate a stack of three or more electrochemical cells, rather than the stack of the first electrochemical cell 1 and the second electrochemical cell 11 alone.

The present disclosure may be embodied in various forms without departing from the spirit or the main features of the present disclosure. The embodiments described above are thus merely illustrative in all respects. The scope of the present disclosure is defined not by the description given above but by the claims. Any modifications and alterations contained in the claims fall within the scope of the present invention.

### Reference Signs List

- X1 to X4: electrochemical cell module
- 1: first electrochemical cell
- 2: first electricity generator
- 2a: positive electrode
- 2b: negative electrode
- 2c: separator
- 3: first casing
- 4: first terminal
- 5: housing
- 6: terminal cover
- 7: main surface plate
- 8: side plate
- 9: bottom plate
- 10: pressure plate
- 11: second electrochemical cell
- 12: second electricity generator
- 13: second casing
- 14: second terminal
- 15: first recess
- 16: spring
- 17: second recess
- 18: first protrusion
- 19: second protrusion
- 20: bond
- 21: through-hole
- 22: first area
- 23: second area
- 24: third area
- A1: first surface
- A2: second surface
- A3: third surface
- A4: fourth surface

## Claims

1. An electrochemical cell module, comprising:
a housing including a main surface plate and a side plate in contact with the main surface plate, the main surface plate having a first surface with a first recess;
an electrochemical cell located in the housing, the electrochemical cell being plate-like and having a main surface;
a pressure plate located in the housing, the pressure plate facing the first surface and being in contact with the main surface; and
a spring having a first end received in the first recess to urge the pressure plate and the main surface plate.

2. The electrochemical cell module according to claim 1, wherein
the pressure plate has a second surface in contact with the electrochemical cell and a third surface opposite to the second surface,
the pressure plate has a second recess on the third surface, and
the spring has a second end received in the second recess.

3. The electrochemical cell module according to claim 2, wherein
the pressure plate has a first protrusion on the third surface.

4. The electrochemical cell module according to any one of claims 1 to 3, wherein the main surface plate has a second protrusion.

5. The electrochemical cell module according to claim 4, wherein
the main surface plate is rectangular and has a long side and a short side as viewed in a direction perpendicular to the first surface,
the main surface plate is joined to the side plate of the housing at the long side, and the second protrusion extends in a direction intersecting the long side.

6. The electrochemical cell module according to any one of claims 1 to 5, wherein the main surface plate has a fourth surface opposite to the first surface,
the main surface plate has, on the fourth surface, a first area located opposite a bottom surface of the first recess and a second area in contact with the side plate, and
the first area is located inward from the second area in the housing.

7. The electrochemical cell module according to any one of claims 1 to 6, wherein the pressure plate and the spring are in contact with each other with a bond in between.

8. The electrochemical cell module according to any one of claims 1 to 7, wherein the main surface plate and the spring are in contact with each other with a bond in between.

9. The electrochemical cell module according to any one of claims 1 to 8, wherein the first recess has a bottom surface with a through-hole.
